# EUROPEAN PATENT SPECIFICATION

(11) **EP 3 538 772 B1**
(45) Date of publication and mention of the grant of the patent: **02.09.2020**
(21) Application number: 17809375.3
(22) Date of filing: 07.11.2017
(51) Int. Cl.: F15B 15/22, F15B 13/00, F16K 1/00

(54) **DAMPING DEVICE FOR A FLUID PRESSURE ACTUATOR**
DÄMPFUNGSVORRICHTUNG FÜR EINEN FLUIDDRUCKAKTUATOR
DISPOSITIF D'AMORTISSEMENT D'ACTIONNEUR HYDRAULIQUE

(30) Priority: 11.11.2016 IT 201600114203
(43) Date of publication of application: 18.09.2019
(73) Proprietor: Camozzi Automation S.p.A., 25122 Brescia (IT)
(72) Inventor: LIZZERI, Matteo, 25126 Brescia (IT)
(74) Representative: Chimini, Francesco
(86) International application number: PCT/IB2017/056950
(87) International publication number: WO 2018/087660

(56) References cited:
- EP-A2- 0 790 413
- DE-A1-102004 009 560
- FR-A1- 2 658 872
- KR-A- 20130 127 375

## Description

The present invention relates to a damping device for a fluid pressure actuator, for example a pneumatic cylinder.

A pneumatic cylinder, provided with a mobile piston with alternating movement inside a piston chamber, is generally provided with damping means to ensure a reduction in the intensity of the impact that occurs when the piston at the end of stroke reaches the front support inside a special seat formed in the cylinder head that closes the piston chamber.

Known damping means include damper screws. A damping duct is formed in the cylinder heads that fluidically connects the piston chamber with a head chamber formed in the cylinder head and adapted to sealingly receive one end of the piston: when the piston approaches the end stroke position, the fluid compressed by the piston flows into the head chamber through the damping duct causing a damping, or a deceleration, of the piston in the phase of impacting the cylinder head. Along the damping duct a seat is formed wherein a damper screw is sealingly housed. Such screw is actuatable by the user to adjust the section of a through opening of the fluid formed in the damping duct. In practice, when the damper screw is screwed down in its relevant seat, the through opening of the fluid is completely closed by a terminal portion of the screw; when the screw is not screwed into the seat, the through opening of the fluid is completely open to obtain maximum damping. By partially screwing in the screw, the damping effect may be regulated. Damping means are known from FR 2658872 A1, KR 2013 0127375 A, DE 10 2004 009560 A1 and EP 0790413 A2.

Since the damper screw seat is open to the outside to allow access to the screw head for screwing/unscrewing it, a problem with this damping system is to ensure that the screw is not ejected by the pressurized fluid, especially if the screw is inserted in the seat but is not screwed in.

To this end, in one embodiment of these damping means, after the screw has been inserted in its relevant seat, the head is re-engaged to obtain a clinching of the edge that delimits the opening of the seat so as to form an undercut which prevents the screw from escaping.

In an alternative embodiment, designed to prevent the need to re-engage the cylinder head, the damper screw is not inserted directly into the seat of the head but is housed with the possibility of screwing/unscrewing it in a respective cartridge suitable for insertion, for example by pressure, in the seat of the head. In this case, after the screw is inserted into the cartridge, the same cartridge is deformed at the edge defining the insertion opening of the screw. The deformed cartridge is then inserted into the seat.

It is evident that in both cases, however, additional machining must be carried out on the seat or the cartridge after the screw has been inserted into the seat or into the cartridge.

The object of the present invention is to propose a screw damping device which, while maintaining a high reliability even at high pressures, is simpler to assemble with respect to the screw devices described above.

In particular, an object of the invention is to avoid carrying out additional machining to ensure the locking of the screw in the respective seat.

Said purpose is achieved with a damping device for a fluid pressure actuator according to claim 1. The dependent claims describe preferred embodiments of the invention.

The features and advantages of the damping device according to the invention will, however, become evident from the description hereinafter of their preferred embodiments, provided by way of indicative and nonlimiting examples, with reference to the accompanying drawings, wherein:
- figure 1 is an elevation view of the damping device according to the invention prior to its insertion into a seat formed in the head of a fluid pressure actuator;
- figures 1a and 1b are two axial sectional views of the damping device of figure 1 with the damper screw in the maximum opening and closing position, respectively, of the passage of the fluid obtained in the cartridge;
- figure 2 shows, in axial section, the damping device inserted in the respective seat of a head of a fluid pressure actuator;
- figure 3 is a perspective view of the head with a damping device;
- figures 4 to 4a show enlarged axial sectional views of the damping device inserted in the respective seat, with the screw fully unscrewed and fully screwed in, respectively; and
- figure 5 is an axial section of a pneumatic cylinder provided with two damping devices, one for each cylinder head.

With reference to the accompanying figures, a damping device for a fluid pressure actuator, for example a pneumatic cylinder 100, is indicated collectively at 1.

The damping device 1 comprises a cartridge 10 and a damper screw 12 inserted into the cartridge 10.

The cartridge 10 is suitable to be inserted into a cartridge seat 14 formed in a head 102 of the actuator. The cartridge 10 extends around a cartridge axis X between a proximal end 10' and a distal end 10". The proximal end 10' is delimited by an end wall 16, for example, substantially orthogonal to the cartridge axis X, wherein an end opening 16' is formed. The distal end 10" is open so as to allow access to the damper screw 12.

A distal portion 18 of the cartridge 10 has a cylindrical inner surface 20 and, near the distal end 10", a conical outer surface 22. At this conical outer surface 22, the thickness of the distal portion 18 of the cartridge 10 rises toward the open distal end 10".

The damper screw 10 comprises a head 120 and a terminal portion 122.

The head 120 smoothly and sealingly engages the cylindrical inner surface 20 of the distal portion 18 of the cartridge 10.

The terminal portion 122 is suitable to engage the end opening 16' of the end wall 16.

For example, the terminal portion 122 has a conical shape so as to partially and variably occlude the end opening 16' depending on the axial position of the damper screw 12 with respect to the cartridge 10.

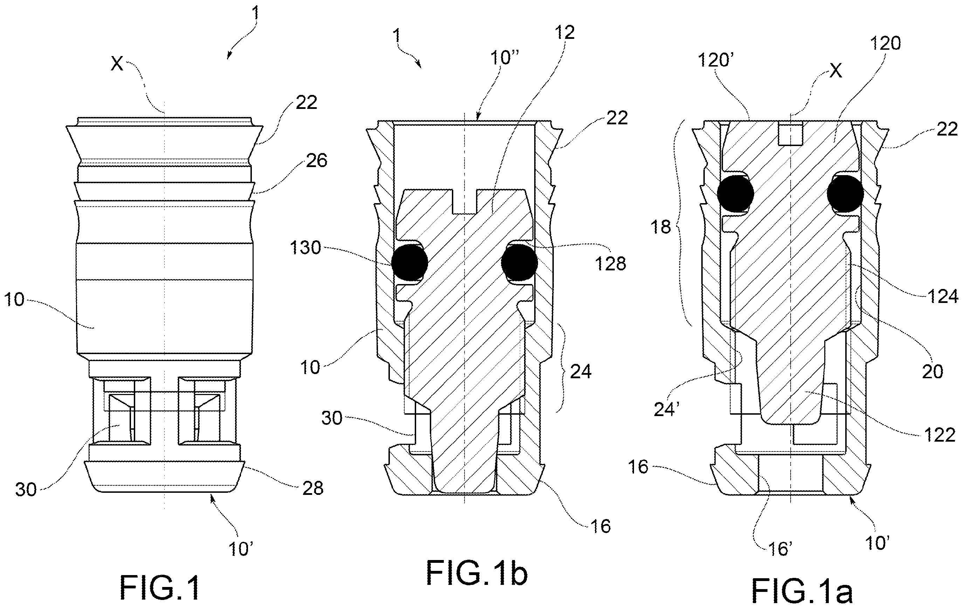

The damper screw 12 is axially movable within the cartridge 10 between a fully retracted position, wherein the terminal portion 122 of the damper screw 12 is completely disengaged from the end opening 16 (figure 1a), and a fully advanced position, wherein the terminal portion 122 of the damper screw 12 abuts against the end wall 16, completely closing the end opening 16' (figure 1b) .

In one embodiment, in the intermediate positions between the fully retracted position and the fully advanced position, the damper screw 12 partially closes the end opening 16'.

The damping device 1 described above is suitable to be inserted into a cartridge seat 14 having a substantially cylindrical side wall 142 with a diameter substantially equal to the outer diameter of the cartridge 10 prior to the increase in thickness due to the conicity of the conical outer surface 22.

In effect, when the damping device 1, i.e. the cartridge 10 with the damper screw 12 therewithin, is inserted in such cartridge seat 14, the distal portion 18 of the cartridge 10 having the conical surface 22 bends toward the cartridge axis X as a result of the interaction between the side wall 142 of the cartridge seat and the conical outer surface 22 forming an undercut that prevents the damper screw 12 from exiting the cartridge through the open distal end 10".

In other words, the cartridge seat 14 forces the distal portion 18 of the cartridge 10 to assume a cylindrical shape corresponding to the cylindrical side wall 142 of the cartridge seat 14, causing a radial deformation of the distal portion 18.

As a result of this radial deformation, when the cartridge 12 is inserted into the cartridge seat 14, the conicity of the outer surface 22 translates into a conicity of the inner surface, which axially engages the head 120 of the damper screw 12, preventing the exit of the damper screw from the cartridge 12 even when the screw is in the fully retracted position and in the presence of high fluid pressure in the cartridge.

The cartridge 10 is made of a material and has a thickness such as to allow the radial deformation of its distal portion following contact with the cartridge seat 14. For example, the cartridge is made of brass (in particular, OT UNIEN 12164 CW 614 N) for machining efficiency. In addition, the technical features of the brass allow a correct deformation of the cartridge during insertion into the cartridge seat.

In one embodiment, the cartridge 10 has an intermediate portion 24 with an inner thread 24' wherein is screwed an intermediate threaded portion 124 of the damper screw 12.

For example, when the damper screw 12 is in the fully retracted position, the damper screw 12 is completely unscrewed from the inner thread 24' of the cartridge 10. Conversely, the fully advanced position corresponds to the intermediate threaded portion 124 of the damper screw fully screwed into the inner threading 24' of the cartridge 10.

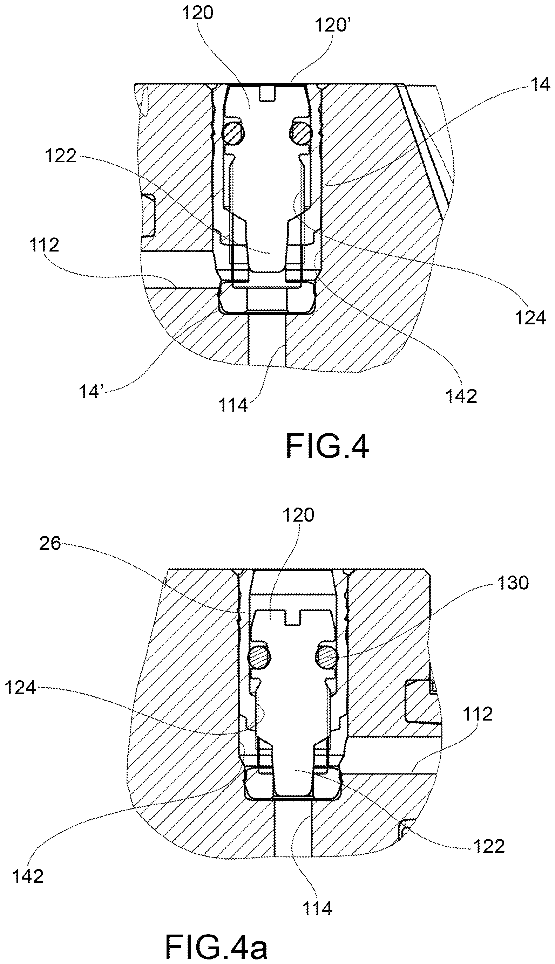

In one embodiment, when the damper screw 12 is in the fully retracted position, the outer surface 120' of the head 120 of the damper screw, i.e. the surface facing the open distal end 10" of the cartridge 10, is coplanar to the edge of the cartridge defining this open distal end 10" (figures 1a and 4).

In this embodiment, the head 120 of the damper screw 12 has a conical shape that is tapered to the distal end of the cartridge. Thus, the distal portion 18 of the cartridge 10, after inserting the cartridge into the cartridge seat 14, may bend over the conical head 120 of the damper screw. It is therefore not necessary to insert the damper screw 12 deep into the cartridge to allow the radial deformation of the distal portion 18 of the cartridge, which improves the axial encumbrance of the damping device and the accessibility of the head 120 of the damper screw 12 in the screwing/unscrewing step.

For example, the conicity of the head 120 of the damper screw 12 is substantially equal and opposite to the conicity of the distal portion 18 of the cartridge 10.

In one embodiment, the outer surface of the cartridge 10 is further provided with a serrated portion 26 suitable to interfere with the side wall 142 of the cartridge seat 14.

For example, the cartridge 10 is suitable to be press-fitted in the cartridge seat 14.

The serrated portion 26 increases interference between the cartridge 10 and the cartridge seat 14, thus making the two elements fit perfectly even under the harshest operating conditions of the actuator 100.

In one embodiment, a further locking tooth 28 is made on the outer surface of the end wall 16 of the cartridge 10.

In one embodiment, in the damper screw 12, between the head 120 and the terminal portion 122, an annular groove 128 is formed wherein is housed an annular sealing element 130 cooperating with the cylindrical inner surface 20 of the cartridge 10.

For example, the annular groove 128 is formed between the head 120 and the intermediate threaded portion 124.

In one embodiment, at least one lateral opening 30 in fluid communication with the end opening 16' is formed in the cartridge 10. For example, this side opening 30 is formed between the intermediate threaded portion 24 and the end wall 16 of the cartridge 10.

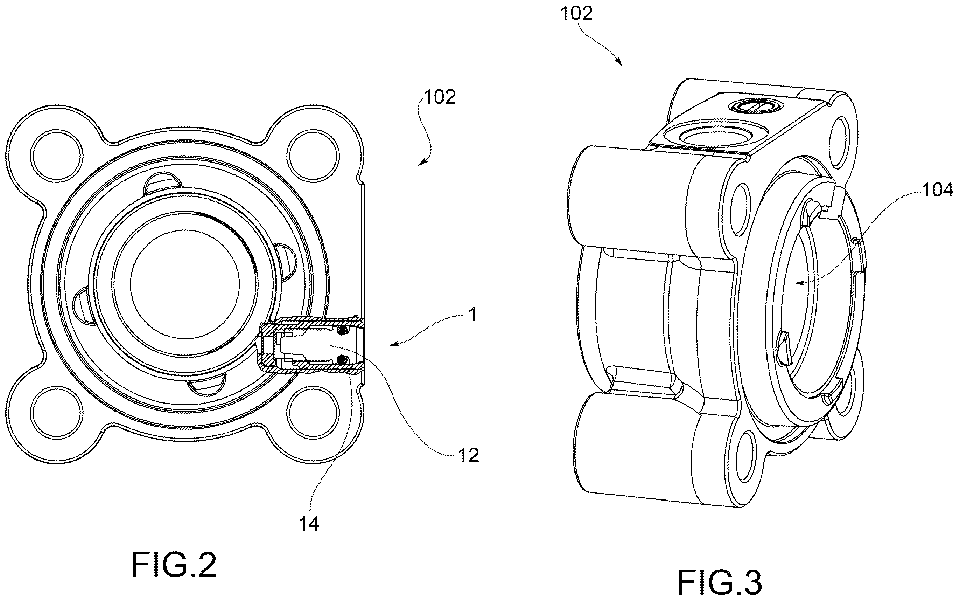

Figures 2 and 3 show an example of a cylinder head 102 wherein a cartridge seat 14 is formed wherein is inserted the damping device 1 according to the invention.

In the cylinder head 102, a damping chamber 104 is suitable to receive a terminal portion of a piston, for example a pneumatic cylinder 100.

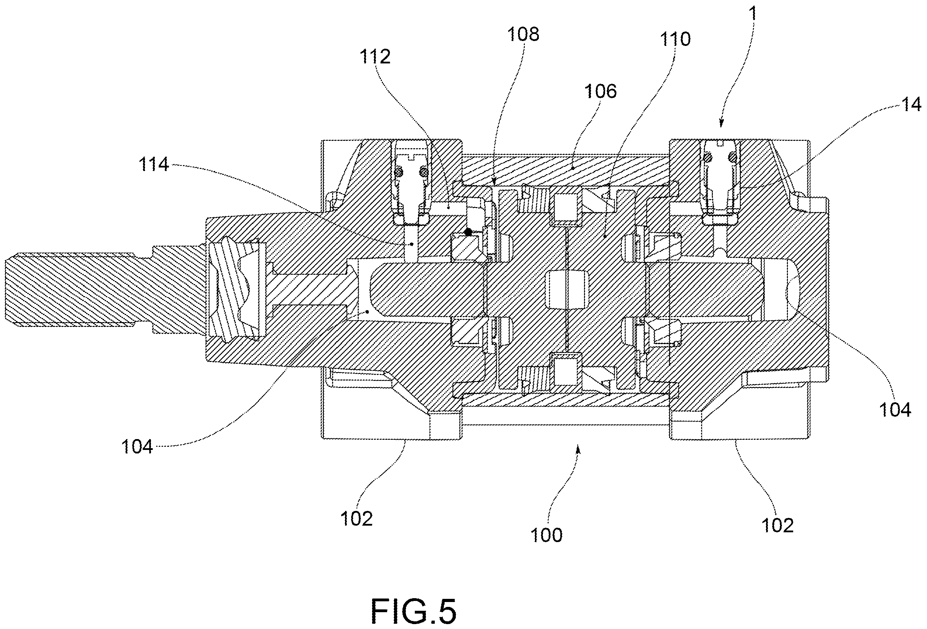

Figure 5 shows a pneumatic cylinder 100 provided with two cylinder heads 102, each of which is provided with a damping device 1 according to the invention.

The pneumatic cylinder 100 comprises a jacket 106 defining a piston chamber 108 wherein a piston 110, subjected to the thrust of a fluid under pressure, is movable.

The piston chamber 108 is closed at the ends by two cylinder heads 102. In each cylinder head, a cartridge seat 14 is formed wherein the damping device 1 is inserted.

Each cartridge seat 14 is in communication, through an inlet duct 112, with the piston chamber 108 and, through an outlet duct 114, with a damping chamber 104 formed in each cylinder head 102.

In particular, the outlet duct 114 faces the end opening 16', while the inlet duct flows into the side opening 30 of the cartridge 10.

As a function of the position of the damper screw 12, the amount of fluid that may pass from the inlet duct 112 to the outlet duct 114 is regulated, and therefore the damping effect is set on the piston 110.

It should be noted that, in one form of embodiment, the open distal end 10" of the cartridge 10 is coplanar to the outer surface of the head 102 surrounding the cartridge seat 14.

Innovatively, the assembly of the damping device 1 in the cylinder head 102 occurs as follows.

The damper screw 12 is inserted into the cartridge 10. It should be noted that, due to the interference between the annular sealing element 130 and the cylindrical inner surface 20 of the cartridge 10, it is not necessary to screw the damper screw 12 to the cartridge at this stage. For example, the intermediate threaded portion 124 of the screw simply abuts against the edge that defines the intermediate threaded portion 24' of the cartridge 10 (figure 1a).

At this point, the pre-mounted assembly made up of the cartridge 10 and the damper screw 12 is inserted into the cartridge seat 14.

For example, such assembly is press-fitted by means of a presser member. It should be noted that, in one embodiment, the end wall 16 of the cartridge 10 may have a conical shape to facilitate the positioning of the assembly in the cartridge seat 14 before full insertion.

In one embodiment, moreover, the pre-insertion of the damping device 1 in the cartridge seat 14 is further facilitated by providing a proximal portion of the cartridge 10, and in particular the end wall 16, with a diameter smaller than the diameter of the cartridge seat 14 at the distal portion 18 of the cartridge 10.

In this embodiment, a terminal portion 14' of the cartridge seat 14 may be sized so as to couple with interference with the end wall 16 of the cartridge 10.

As explained above, due to the complete insertion of the cartridge 10 into the cartridge seat 14, the distal portion 18 of the cartridge radially deforms to provide a mechanical stop which prevents an unthreading of the damper screw 12 from the cartridge 10.

Therefore, no further machining is required on either the cartridge or the head 102 of the actuator 100.

To the embodiments of the damping device and the fluid pressure actuator according to the invention, a person skilled in the art may, to satisfy contingent needs, make modifications, adaptations and replacements of some elements with others that are functionally equivalent, without departing from the scope of the following claims. Each of the features described as belonging to a possible embodiment may be implemented independently by the other described embodiments.

## Claims

1. Damping device for a fluid pressure actuator (100), comprising a cartridge (10) suitable to be inserted in a cartridge seat (14) formed in a head (102) of the actuator and a damper screw (12) inserted in the said cartridge, wherein said cartridge (10) extends about a cartridge axis (X) between a proximal end defined by an end wall (16) in which is formed an end opening (16') suitable to be engaged by a terminal portion (122) of the damper screw (12), and an open distal end (10"), wherein a distal portion (18) of the cartridge has a cylindrical inner surface (20), a head (120)of the damper screw (12)sealingly engaging the cylindrical inner surface (20) of the cartridge (10), **characterized in that** the distal portion (18) of the cartridge (10) has a conical outer surface (22) and at the conical outer surface (22) the thickness of the distal portion (18) of the cartridge increases towards said open distal end (10"), in such a way that, when the cartridge (10) is inserted in the cartridge seat (14), said distal portion (18) of the cartridge bends towards the cartridge axis (X) as a result of the interaction between the side wall of the cartridge seat (14) and the conical outer surface (22), forming an undercut that prevents the damper screw (12) from exiting the cartridge through the open distal end (10").

2. Damping device according to claim 1, wherein an intermediate portion (24) of the cartridge (10) has a threaded inner surface (24') in which is screwed a threaded intermediate portion (124) of the damper screw (12) .

3. Damping device according to claim 1 or 2, wherein in the cartridge is formed at least one side opening (30) in fluidic communication with the end opening (16').

4. Damping device according to any of the preceding claims, wherein the outer surface of the cartridge is provided with a serrated portion (26) suitable to interfere with the side wall of the cartridge seat.

5. Damping device according to any of the preceding claims, wherein in the damper screw is formed, between the head and the terminal portion, an annular groove (128) in which is housed an annular sealing element (130) cooperating with the cylindrical inner surface of the cartridge.

6. Damping device according to any of the preceding claims, wherein the head (120) of the damper screw has a conical shape that tapers towards the open distal end of the cartridge seat.

7. Fluid pressure actuator comprising a piston chamber wherein is movable a piston subjected to the thrust of a fluid under pressure, said chamber being closed at at least one end by a head (102) in which is formed a cartridge seat (14) in which is inserted a damper device (1) according to any of the preceding claims, said seat cartridge (14) being in fluidic communication with said piston chamber and with a damping chamber formed in said head.

8. Actuator according to the preceding claim, wherein the open end of the cartridge is coplanar with the outer surface of the head that surrounds the cartridge seat.

9. Actuator according to claim 7 or 8, wherein the cartridge is pressure-inserted in the cartridge seat.

## Patentansprüche

1. Dämpfervorrichtung für einen Fluid-Druck-Aktuator (100), umfassend einen Einsatz (10), welcher dazu geeignet ist, in einen Einsatz-Sitz (14) eingesetzt zu werden, welcher in einem Kopf (102) des Aktuators gebildet ist, und eine Dämpfer-Schraube (12), welche in den Einsatz eingesetzt ist, wobei sich der Einsatz (10) um eine Einsatz-Achse (X) zwischen einem proximalen Ende, welches durch eine Endwand (16) definiert ist, in welcher eine Endöffnung (16') gebildet ist, welche dazu geeignet ist, durch einen Anschluss-Abschnitt (122) der Dämpfer-Schraube (12) eingegriffen zu werden, und einem offenen distalen Ende (10") erstreckt, wobei ein distaler Abschnitt (18) des Einsatzes eine zylindrische innere Fläche (20) aufweist, wobei ein Kopf (120) der Dämpfer-Schraube (12) die zylindrische innere Fläche (20) des Einsatzes (10) in einer abdichtenden Weise eingreift,
**dadurch gekennzeichnet, dass** der distale Abschnitt (18) des Einsatzes (10) eine konische äußere Fläche (22) aufweist und an der konischen äußeren Fläche (22) die Dicke des distalen Abschnitts (18) des Einsatzes in Richtung des offenen distalen Endes (10") in einer derartigen Weise ansteigt, dass, wenn der Einsatz (10) in den Einsatz-Sitz (14) eingesetzt ist, sich der distale Abschnitt (18) des Einsatzes in Richtung der Einsatz-Achse (X) als ein Ergebnis der Interaktion zwischen der Seitenwand des Einsatz-Sitzes (14) und der konischen äußeren Fläche (22) biegt, wobei ein Hinterschnitt gebildet wird, welcher die Dämpfer-Schraube (12) davon abhält, durch das offene distale Ende (10") aus dem Einsatz auszutreten.

2. Dämpfervorrichtung nach Anspruch 1, wobei ein Zwischen-Abschnitt (24) des Einsatzes (10) eine innere Gewindefläche (24') aufweist, in welche ein mit einem Gewinde versehener Zwischen-Abschnitt (124) der Dämpfer-Schraube (12) geschraubt ist.

3. Dämpfervorrichtung nach Anspruch 1 oder 2, wobei in dem Einsatz wenigstens eine Seitenöffnung (30) in fluidischer Kommunikation mit der Endöffnung (16') gebildet ist.

4. Dämpfervorrichtung nach einem der vorhergehenden Ansprüche, wobei die äußere Fläche des Einsatzes mit einem gezackten Abschnitt (26) bereitgestellt ist, welcher dazu geeignet ist, mit der Seitenwand des Einsatz-Sitzes zu wechselwirken.

5. Dämpfervorrichtung nach einem der vorhergehenden Ansprüche, wobei in der Dämpfer-Schraube zwischen dem Kopf und dem Anschluss-Abschnitt eine ringförmige Nut (128) gebildet ist, in welcher ein ringförmiges Dichtungselement (130) aufgenommen ist, welches mit der zylindrischen inneren Fläche des Einsatzes zusammenwirken.

6. Dämpfervorrichtung nach einem der vorhergehenden Ansprüche, wobei der Kopf (120) der Dämpfer-Schraube eine konische Form aufweist, welche sich in Richtung des offenen distalen Endes des Einsatz-Sitzes verjüngt.

7. Fluid-Druck-Aktuator, umfassend eine Kolben-Kammer, worin ein Kolben bewegbar ist, welcher dem Schub eines Fluids unter Druck ausgesetzt ist, wobei die Kammer an wenigstens einem Ende durch einen Kopf (102) geschlossen ist, in welchem ein Einsatz-Sitz (14) gebildet ist, in welchem eine Dämpfervorrichtung (1) nach einem der vorhergehenden Ansprüche eingesetzt ist, wobei der Sitz-Einsatz (14) in fluidischer Kommunikation mit der Kolben-Kammer und mit einer Dämpfer-Kammer ist, welche in dem Kopf gebildet ist.

8. Aktuator nach dem vorhergehenden Anspruch, wobei das offene Ende des Einsatzes mit der äußeren Fläche des Kopfs koplanar ist, welche den Einsatz-Sitz umgibt.

9. Aktuator nach Anspruch 7 oder 8, wobei der Einsatz in den Einsatz-Sitz druckeingesetzt ist.

## Revendications

1. Dispositif d'amortissement pour un actionneur hydraulique (100), comprenant une cartouche (10) appropriée pour être insérée dans un siège de cartouche (14) formé dans une tête (102) de l'actionneur et une vis d'amortisseur (12) insérée dans ladite cartouche, dans lequel ladite cartouche (10) s'étend autour d'un axe de cartouche (X) entre une extrémité proximale définie par une paroi d'extrémité (16) dans laquelle est formée une ouverture d'extrémité (16') appropriée pour être engagée par une portion terminale (122) de la vis d'amortisseur (12), et une extrémité distale ouverte (10"), dans lequel une portion distale (18) de la cartouche a une surface interne cylindrique (20), une tête (120) de la vis d'amortisseur (12) engageant de manière étanche la surface interne cylindrique (20) de la cartouche (10), **caractérisé en ce que** la portion distale (18) de la cartouche (10) a une surface externe conique (22) et au niveau de la surface externe conique (22), l'épaisseur de la portion distale (18) de la cartouche augmente vers ladite extrémité distale ouverte (10"), de telle sorte que, lorsque la cartouche (10) est insérée dans le siège de cartouche (14), ladite portion distale (18) de la cartouche fléchisse vers l'axe de cartouche (X) par suite de l'interaction entre la paroi de côté du siège de cartouche (14) et la surface externe conique (22), formant une contre-dépouille qui empêche la vis d'amortisseur (12) de sortir de la cartouche à travers l'extrémité distale ouverte (10").

2. Dispositif d'amortissement selon la revendication 1, dans lequel une portion intermédiaire (24) de la cartouche (10) a une surface interne filetée (24') dans laquelle est vissée une portion intermédiaire filetée (124) de la vis d'amortisseur (12).

3. Dispositif d'amortissement selon la revendication 1 ou 2, dans lequel, dans la cartouche est formée au moins une ouverture de côté (30) en communication fluidique avec l'ouverture d'extrémité (16').

4. Dispositif d'amortissement selon l'une quelconque des revendications précédentes, dans lequel la surface externe de la cartouche est munie d'une portion striée (26) appropriée pour interférer avec la paroi de côté du siège de cartouche.

5. Dispositif d'amortissement selon l'une quelconque des revendications précédentes, dans lequel, dans la vis d'amortisseur est formée, entre la tête et la portion terminale, une rainure annulaire (128) dans laquelle est logé un élément d'étanchéité annulaire (130) coopérant avec la surface interne cylindrique de la cartouche.

6. Dispositif d'amortissement selon l'une quelconque des revendications précédentes, dans lequel la tête (120) de la vis d'amortisseur a une forme conique qui s'effile vers l'extrémité distale ouverte du siège de cartouche.

7. Actionneur hydraulique comprenant une chambre de piston dans lequel est mobile un piston soumis à la poussée d'un fluide sous pression, ladite chambre étant fermée à au moins une extrémité par une tête (102) dans laquelle est formé un siège de cartouche (14) dans lequel est inséré un dispositif d'amortisseur (1) selon l'une quelconque des revendications précédentes, ladite cartouche de siège (14) étant en communication fluidique avec ladite chambre de piston et avec une chambre d'amortissement formée dans ladite tête.

8. Actionneur selon la revendication précédente, dans lequel l'extrémité ouverte de la cartouche est coplanaire avec la surface externe de la tête qui entoure le siège de cartouche.

9. Actionneur selon la revendication 7 ou 8, dans lequel la cartouche est insérée par pression dans le siège de cartouche.
